# EUROPÄISCHE PATENTSCHRIFT

(11) **EP 1 796 960 B1**
(45) Veröffentlichungstag und Bekanntmachung des Hinweises auf die Patenterteilung: **26.01.2011**
(21) Anmeldenummer: 05802354.0
(22) Anmeldetag: 29.09.2005
(51) Int. Cl.: B64C 1/14

(54) **LUFTFAHRZEUG MIT KABINEN-DIFFERENZDRUCK-WARNSYSTEM**
AIRCRAFT PROVIDED WITH A CABIN DIFFERENTIAL PRESSURE WARNING SYSTEM
AERONEF A SYSTEME D'AVERTISSEMENT DE PRESSION DIFFERENTIELLE CABINE

(30) Priorität: 30.09.2004 DE 102004048217
(43) Veröffentlichungstag der Anmeldung: 20.06.2007
(73) Patentinhaber: EUROCOPTER DEUTSCHLAND GmbH, 86609 Donauwörth (DE)
(72) Erfinder: NÄGLER, Dietmar, 86609 Donauwörth (DE); SCHREITMÜLLER, Holger, 86655 Harburg (DE)
(74) Vertreter: GPI & Associés
(86) Internationale Anmeldenummer: PCT/EP2005/010509
(87) Internationale Veröffentlichungsnummer: WO 2006/037543

(56) Entgegenhaltungen:
- WO-A-2004/022425
- GB-A- 601 058
- US-A- 5 251 851
- US-A- 5 577 781
- US-B1- 6 452 510

## Beschreibung

### TECHNISCHES GEBIET

Die vorliegende Erfindung betrifft ein Luftfahrzeug mit einem Kabinen-Differenzdruck-Warnsystem.

### STAND DER TECHNIK

Luftfahrzeuge, die in großen Reiseflughöhen operieren, sind üblicherweise mit einer Druckkabine ausgestattet, welche durch eine verriegelbare Tür zugänglich ist. Die Druckkabine gewährleistet während eines Fluges einen von der jeweiligen Flughöhe und dem dort jeweils vorherrschenden atmosphärischen Umgebungsdruck weitgehend unabhängigen, im Wesentlichen konstant gehaltenen und für die Insassen des Luftfahrzeugs verträglichen Kabineninnendruck, welcher annähernd einem atmosphärischen Luftdruck in einer Höhe von ca. 8000 feet bis max. 10000 feet entspricht. Da der atmosphärische Umgebungsdruck mit steigender Flughöhe fällt, herrscht in der Druckkabine bei Reiseflughöhen über 10000 feet also ein gegenüber dem atmosphärischen Umgebungsdruck erhöhter Druck ("Überdruck"). Der Kabineninnendruck wird im Allgemeinen über eine Innendruck-Regeleinrichtung sowie das sog. Flight Management System des Luftfahrzeugs geregelt. Wenn sich das Luftfahrzeug nach einem Flug wieder im geparkten Zustand am Boden befindet, sollte der Kabineninnendruck wieder dem atmosphärischen Umgebungsdruck entsprechen, um ein gefahrloses Öffnen der Tür sicher zu stellen. Mit anderen Worten sollte keine Druckdifferenz zwischen dem Kabineninneren und der Außenumgebung bestehen. Diese Druckdifferenz wird nachfolgend auch als Kabinen-Differenzdruck bezeichnet werden.

Da ein Kabineninnendruck, der kleiner als der atmosphärische Umgebungsdruck ist (d.h. ein "Unterdruck"), für die Struktur des Luftfahrzeugs sehr gefährlich ist, besitzen mit Druckkabinen ausgestattete Luftfahrzeuge in der Regel spezielle Schutzeinrichtungen mit Einwegventilen, welche den Aufbau eines negativen Differenzdrucks ("Unterdrucks") verhindern. Ungeachtet dessen kann es in bestimmten Fällen nach einem Flug jedoch weiterhin zu einem mehr oder weniger großen Kabinen-Differenzdruck kommen. Hierbei handelt es sich in der Regel um einen "Überdruck" (wobei jedoch auch geringe "Unterdrücke" möglich sind). Wird die Tür in diesem Zustand entriegelt und geöffnet, springt sie unkontrolliert schnell auf und es entsteht ein starker Luftstrom mit einer entsprechenden Sogwirkung. Dies führt zu einer nicht unerheblichen Gefährdung derjenigen Personen, welche die Tür bedienen oder sich in deren unmittelbarer Nähe aufhalten. Darüber hinaus können strukturelle Schäden am Luftfahrzeug auftreten.

Aus diesem Grund sind Luftfahrzeuge, die über eine Druckkabine verfügen, mit einem Kabinen-Differenzdruck-Warnsystem ausgestattet, welches z.B. bei einem beabsichtigten Öffnen der Tür einen etwaigen Kabinen-Differenzdruck erkennt und ein Warnsignal ausgibt. Die Luftfahrzeug-Crew kann dann die Druckkabine vor dem Öffnen der Tür zunächst belüften und einen Druckausgleich zwischen Kabine und Außenumgebung herstellen, so dass das Öffnen der Tür dann gefahrlos durchführbar ist.

Konventionelle Kabinen-Differenzdruck-Warnsysteme, die das Vorhandensein eines Kabinen-Differenzdrucks z.B. mit Hilfe einer Warnlampe anzeigen, sind an das elektrische Energieversorgungsnetz des Luftfahrzeugs angeschlossen und werden von diesem mit elektrischer Energie versorgt. Fällt dieses elektrische Energieversorgungsnetz aus, funktioniert das Kabinen-Differenzdruck-Warnsystem nicht mehr. Das Bedienungspersonal der Tür kann vor dem Kabinen-Differenzdruck daher nicht mehr gewarnt werden, und die oben erläuterten Gefahren bleiben bestehen. Ein vergleichbares Gefährdungspotential besteht im Falle von Wartungsarbeiten, wenn die elektrische Energieversorgung des Luftfahrzeugs nicht verfügbar ist und die Kabine unter Druck steht.

Das Dokument WO 2004022425 (A1) offenbart eineVorrichtung zum Warnen vor Differenzdruck beim Öffnen einer druckbeaufschlagten Verschliesseinrichtung einer Öffnung im Flugzeugrumpf mittels einer Öffnungsmechanik. Eine Luftführung ist von der Seite mit höherem Druck zur Seite mit niedrigerem Druck vorgesehen, die durch ein Ventil verschliessbar ist, wobei das Ventil mit einem in Wirkverbindung mit der Öffnungsmechanik stehenden Steuerhebel steuerbar ist und beim Öffnen des Ventils und einem bestehenden Differenzdruck ein akustisches Signal erzeugt.

### DARSTELLUNG DER ERFINDUNG

Der Erfindung liegt die Aufgabe beziehungsweise das technische Problem zugrunde, die dem gattungsgemäßen Stand der Technik anhaftenden Nachteile möglichst weitgehend zu vermeiden und ein mit einer Druckkabine ausgerüstetes Luftfahrzeug mit einem verbesserten, zuverlässigeren und sichereren Kabinen-Differenzdruck-Warnsystem zu schaffen.

Diese Aufgabe wird durch ein erfindungsgemäßes Luftfahrzeug mit den Merkmalen des Anspruchs 1 gelöst.

Dieses Luftfahrzeug umfasst eine Druckkabine mit einer verriegelbaren Tür, ein elektrisches Energieversorgungsnetz sowie ein Kabinen-Differenzdruck-Warnsystem mit einer vom elektrischen Energieversorgungsnetz unabhängigen, autonomen Warnsystem-Energieversorgungseinrichtung.

Da bei der erfindungsgemäßen Lösung die Energieversorgungseinrichtung des Kabinen-Differenzdruck-Warnsystems von dem elektrischen Energieversorgungsnetz des Luftfahrzeug gänzlich unabhängig und als separates, autonomes System ausgestaltet ist, kann es selbst dann zuverlässig funktionieren, wenn das elektrische Energieversorgungsnetz des Luftfahrzeugs Störungen aufweist oder sogar vollständig zusammenbricht oder außer Betrieb ist. Zudem arbeitet das Kabinen-Differenzdruck-Warnsystem nahezu verschleißfrei. Aufgrund der vorhergenannten Vorteile kann die Sicherheit beim Öffnen der Tür einer Druckkabine erheblich verbessert werden. Darüber hinaus wird das Energieversorgungsnetz des Luftfahrzeug in seinem normalen Betrieb (kein Ausfall oder Defekt) nicht durch das Kabinen-Differenzdruck-Warnsystem belastet. Ferner ist es möglich, das Kabinen-Differenzdruck-Warnsystem einschließlich seiner unabhängigen, autonomen Energieversorgungseinrichtung als separate, unabhängige, autonome und modulare Gesamteinheit auszubilden und z.B. vollständig in die Tür zu integrieren. Schnittstellen zum besagten Energieversorgungsnetz bzw. Bordnetz des Luftfahrzeuges sind dann nicht mehr bzw. nur in einem geringen Umfang erforderlich. Und schließlich lassen sich konventionelle Luftfahrzeuge leicht auf das erfindungsgemäße System umrüsten, wobei auf eine Vielzahl bereits bestehender Bauteile und Baugruppen zurückgegriffen werden kann.

Durch die zuvor erläuterten positiven Eigenschaften lässt sich somit die Komplexität und potentielle Störanfälligkeit des Gesamtsystems reduzieren und eine konstruktiv und herstellungstechnisch einfachere, modulare, leicht zu installierende, kostengünstige und im Bedarfsfall leicht zu wartende bzw. auszutauschende Vorrichtung bereit stellen, was die Sicherheit und Wirtschaftlichkeit des Luftfahrzeugs erhöht.

Weitere bevorzugte und vorteilhafte Ausgestaltungsmerkmale des erfindungsgemäßen Luftfahrzeugs sind Gegenstand der Unteransprüche.

Ein bevorzugtes Ausführungsbeispiel der Erfindung mit zusätzlichen Ausgestaltungsdetails und weiteren Vorteilen ist nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein schematisches Blockschaltbild eines Kabinen-Differenzdruck- Warnsystems eines erfindungsgemäßen Luftfahrzeugs;
- Fig. 2: ein erstes Flussdiagramm des Kabinen-Differenzdruck-Warnsystems von Fig. 1; und
- Fig. 3: ein zweites Flussdiagramm des Kabinen-Differenzdruck- Warnsystems von Fig. 1.

### DARSTELLUNG EINES BEVORZUGTEN AUSFÜHRUNGSBEISPIELS

Ein erfindungsgemäßes Luftfahrzeug umfasst eine Druckkabine mit einer verriegelbaren Tür und einer Türverriegelungseinrichtung. Die Tür besitzt einen Handgriff oder ein anderes geeignetes Element, mit dem die Türverriegelungseinrichtung zum Verriegeln bzw. Entriegeln betätigt und die Tür zum Öffnen bzw. Verschließen manuell oder mittels Unterstützung eines automatischen Türmechanismus bewegt werden kann. Die Tür ist in diesem Ausführungsbeispiel mit einer Notrutsche ausgestattet. Die Notrutsche muss in einem Notfall rasch ausgelöst werden können. Um dies zu ermöglichen, ist die Notrutsche über ein Bedienungselement zunächst scharf zu stellen. Bei einem anschließenden Öffnen der Tür wird die Notrutsche dann sofort über eine Auslöseeinrichtung automatisch aktiviert und ausgelöst. Im normalen Betrieb (kein Notfall) hingegen, z.B. wenn Passagiere bei geparktem Luftfahrzeug die Druckkabine über die Tür verlassen sollen, darf die Notrutsche nicht scharf gestellt sein und nicht auslösen. Das Luftfahrzeug verfügt des weiteren über ein allgemein vorbekanntes elektrisches Energieversorgungsnetz. Das Luftfahrzeug mit seinen zuvor erläuterten Komponenten ist in den beigefügten Zeichnungen der besseren Übersichtlichkeit halber nicht gezeigt.

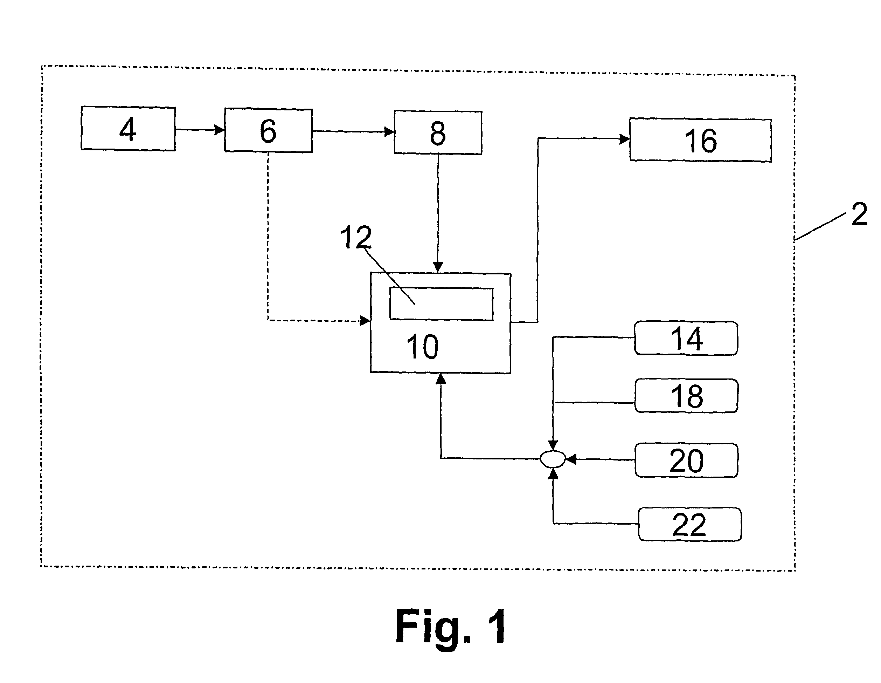

Darüber hinaus besitzt das erfindungsgemäße Luftfahrzeug ein Kabinen-Differenzdruck-Warnsystem (nachfolgend kurz KDWS genannt) 2, welches in der Fig. 1 in einem schematischen Blockschaltbild dargestellt ist. Das KDWS 2 ist vollständig oder im Wesentlichen vollständig in die Tür integriert und besitzt eine von dem elektrischen Energieversorgungsnetz des Luftfahrzeugs unabhängige, autonome Warnsystem-Energieversorgungseinrichtung. Diese umfasst im vorliegenden Ausführungsbeispiel eine elektrische Energieerzeugungseinrichtung, nämlich eine photovoltaischen Energieerzeugungseinrichtung in Form von einer oder mehreren Solarzellen 4.

Die Solarzellen 4 sind in diesem Beispiel an der Luftfahrzeug-Außenseite der Tür angeordnet und schließen mit der Außenseite aus aerodynamischen Gründen vorzugsweise bündig ab. Sie können jedoch auch innerhalb der Tür (z.B. in einem sog. Fenstertrichter) angebracht und durch ein lichtdurchlässiges Element abgedeckt sein, welches die Lichtzufuhr zu den Solarzellen 4 ermöglicht. Ebenso ist eine Anbringung im Innenbereich der Druckkabine denkbar. Wie aus der Fig. 1 des weiteren hervor geht, sind die Solarzellen 4 über einen Laderegler 6 mit einem Akkumulator 8 verbunden, welcher als elektrische Energie-Zwischenspeichereinrichtung fungiert. Der Akkumulator 8 besitzt eine hinreichende, auf den Energiebedarf des KDWSs 2 abgestimmte Kapazität, so dass eine ausreichende Reserve besteht, um auch Dunkelphasen zuverlässig zu überbrücken.

Als weitere Komponente umfasst das KDWS 2 eine zentrale Differenzdruck-Kontrolleinrichtung 10 (nachfolgend kurz Kontrolleinrichtung genannt), die an den Akkumulator 8 angeschlossen ist. Wie in der Fig. 1 durch eine gestrichelte Linie angedeutet ist, könnte die Kontrolleinrichtung 10 bei fehlendem Akkumulator 8 auch direkt an den Laderegler 6 angeschlossen sein. Ebenso ist es möglich, den Akkumulator 8 auf geeignete Weise (siehe unten) zu überbrücken und die Energie für die Kontrolleinrichtung 10 direkt über den Laderegler 6 zu beziehen, falls der Akkumulator 8 aufgrund eines Defektes oder eines zu geringen Ladezustandes ausfällt. Die Kontrolleinrichtung 10 kann eine Datenverarbeitungseinrichtung 12 aufweisen bzw. funktional mit einer solchen gekoppelt sein. Die Datenverarbeitungseinrichtung 12 ist frei programmierbar und/oder verfügt bei Bedarf auch über fest vorprogrammierte Komponenten (z.B. in Form von festen oder auswechselbaren Kontrollmodulen). Die Datenverarbeitungseinrichtung 12 besitzt vorzugsweise eine Schnittstelle, mit der sie an eine externe Datenverarbeitungseinrichtung (nicht gezeigt) anschließbar ist, um Daten aus der Datenverarbeitungseinrichtung 12 auslesen oder in diese einlesen zu können und die Kontrolleinrichtung 10 auf diese Weise optional an unterschiedliche Betriebsbedingungen, Kontrollroutinen, Luftfahrzeugtypen und Zusatzeinrichtungen anzupassen.

Das KDWS 2 weist außerdem eine mit der Kontrolleinrichtung 10 gekoppelte Kabinendifferenzdruck-Sensoreinrichtung auf. Diese besitzt einen Kabinendifferenzdruck-Sensor 14 bzw. Differenzdruck-Schalter (nachfolgend kurz Differenzdrucksensor 14 genannt), der einen Kabinen-Differenzdruck ΔP erfasst und bei Erreichen eines vorbestimmten Differenzdruck-Schwellwertes ΔP_{S} ein Signal bzw. Schaltsignal an die Kontrolleinrichtung 10 liefert. Der Differenzdrucksensor 14 bzw. Differenzdruck-Schalter ist vorzugsweise einstellbar, so dass bei Bedarf unterschiedliche Differenzdruck-Schwellwerte ΔP_{S} vorbestimmt werden können. Beispielsweise wird als Differenzdruck-Schwellwert ΔP_{S} ein Wert von ± 2,5 Millibar voreingestellt.

Die Kontrolleinrichtung 10 ist mit einer Warnsignal-Ausgabeeinrichtung 16 verbunden, welche in diesem Ausführungsbeispiel sowohl einen akustischen als auch einen optischen Warnsignalgeber besitzt. Als akustische Warnsignalgeber der Warnsignal-Ausgabeeinrichtung 16 sind z.B. Lautsprecher, Sirenen, Summer, Pieper, Pfeifen, etc., oder ein mit einem Lautsprecher gekoppelter Sprachengenerator zum Ausgeben eines Warnhinweises realisierbar. Falls ein Sprachengenerator verwendet wird, so ist dieser vorzugsweise programmierbar und einstellbar, so dass bei Bedarf Warnhinweise in unterschiedlichen Sprachen ausgegeben werden können. Als optische Warnsignalgeber der Warnsignal-Ausgabeeinrichtung 16 können z.B. Warnlampen oder Displays mit einer geeigneten Anzeige oder dergleichen Anwendung finden. Auch Kombinationen aus den jeweiligen Warnsignalgebern sind möglich.

Zusätzlich zu dem oben genannten Differenzdrucksensor 14 ist die Kontrolleinrichtung 10 mit einer Sensoreinrichtung 18 zum Erfassen eines Zustands der Tür (nachfolgend kurz Türsensor 18 genannt) gekoppelt. Der Türsensor 18 erkennt zum Beispiel einen Betätigungszustand des Handgriffs der Tür (z.B. Türgriff gezogen oder nicht gezogen) und gibt ein entsprechendes Signal an die Kontrolleinrichtung 10 aus. Neben dem Türsensor 18 ist eine mit der Kontrolleinrichtung 10 verbundene Sensoreinrichtung 20 zum Erfassen eines Zustands der Notrutsche vorgesehen (nachfolgend kurz Notrutschen-Sensor 20 genannt). Der Notrutschen-Sensor 20 erkennt z.B., ob die Notrutsche scharf gemacht wurde oder nicht und liefert ein entsprechendes Signal an die Kontrolleinrichtung 10.

Und schließlich ist die Kontrolleinrichtung 10 auch noch mit einer Sensoreinrichtung 22 zum Erfassen eines Zustands der Energie-Zwischenspeichereinrichtung, d.h. hier des Akkumulators 8, verbunden. Diese Sensoreinrichtung 22 wird nachfolgend kurz als Akkusensor 22 bezeichnet. Dieser erfasst insbesondere den Ladezustand des Akkumulators 8 und liefert bei Erreichen eines vorbestimmten Schwellwertes (der z.B. einen niedrigen Ladezustand repräsentiert) ein Signal an die Kontrolleinrichtung 10. Der Akkusensor 22 kann auch als Akku-Sensorschalter ausgestaltet sein, um die bereits oben erwähnte Überbrückung zum Laderegler 6 zu schalten (siehe Fig. 1, gestrichelte Linie), falls der Ladezustand des Akkumulators 8 zu gering ist bzw. der Akkumulator 8 durch eine Systemstörung oder einen Defekt ausfällt.

Obwohl in diesem Ausführungsbeispiel alle der genannten Sensoren 14, 18, 20, 22 mit der Kontrolleinrichtung 10 verbunden sind, ist es grundsätzlich möglich, für den Türsensor 18 und/oder den Notrutschensensor 20 und/oder den Akkusensor 22 separate Teilsysteme und/oder Schaltkreise und/oder einen separaten Warnsignalgeber vorzusehen. Dies führt jedoch zu einem erhöhten Herstellungsaufwand, so dass die zuvor beschriebene Variante bevorzugt ist. Überdies kann die Kontrolleinrichtung 10 über eine weitere, nicht gezeigte Schnittstelle mit einem Anzeigeinstrument im Cockpit und/oder der Kabine des Luftfahrzeugs gekoppelt sein, um z.B. einem Piloten und/oder Crewmitgliedern Informationen über den Kabinen-Differenzdruck und den Zustand der Tür, des Akkumulators 8, des Ladereglers 6 oder der Solarzellen 4 zu geben.

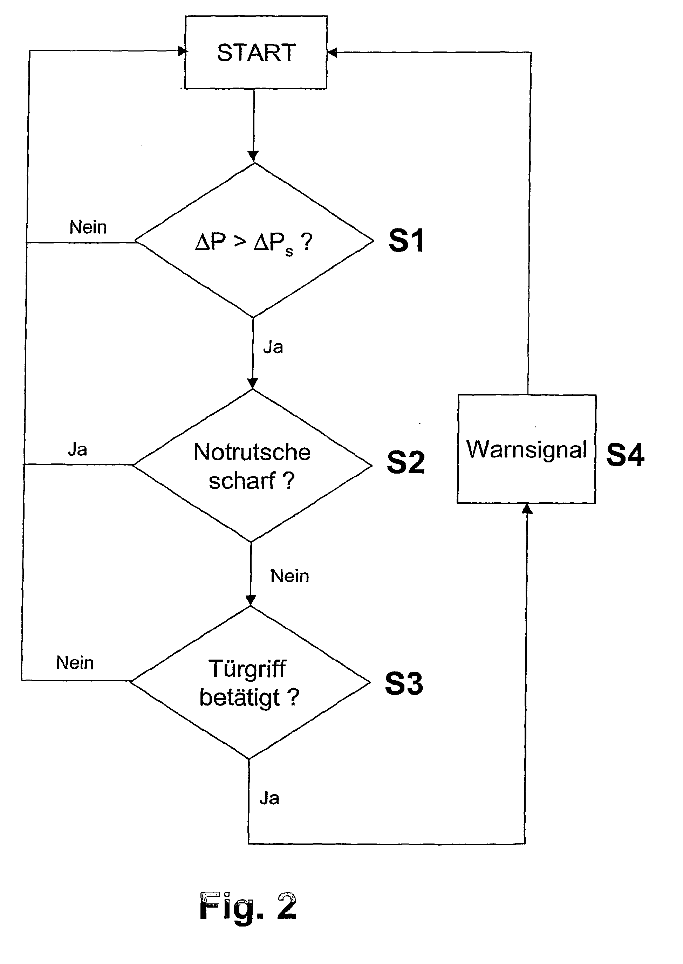

Unter Bezugnahme auf die Fig. 2, welche ein erstes Flussdiagramm des KDWSs 2 von Fig. 1 zeigt, wird nun die Funktion des KDWSs 2 anhand einer Differenzdruck-Warnroutine beschrieben werden, welche in der Kontrolleinrichtung 10 abläuft, wenn sich das Luftfahrzeug in einem geparkten Zustand am Boden befindet und die Tür der Druckkabine geöffnet werden soll.

Ausgehend von einer Startfunktion (START) wird in einem ersten Schritt S1 zunächst mittels des Differenzdrucksensors 14 der Differenzdruck ΔP erfasst und mit dem voreingestellten Differenzdruck-Schwellwert ΔP_{S} verglichen. Ist der erfasste Differenzdruck ΔP größer als der Differenzdruck-Schwellwert ΔP_{S}, geht die Routine zum Schritt S2 über, in dem mittels des Notrutschen-Sensors 20 überprüft wird, ob die Notrutsche scharf gemacht ist. Falls ja, wird die Differenzdruck-Warnroutine verlassen und das Bedienungspersonal der Tür im Rahmen einer in der Fig. 2 nicht gezeigten Nebenroutine darauf aufmerksam gemacht, dass die Tür noch scharf ist und dieser Zustand zunächst deaktiviert werden muss. Ist die Notrutsche hingegen nicht scharf, geht die Routine zum Schritt S3 weiter.

Im Schritt S3 wird mittels des Türsensors 18 überprüft, ob der Handgriff der Tür betätigt ist oder nicht. Fall nicht, wird die Routine wieder verlassen. Ist der Türgriff hingegen betätigt, aktiviert die Kontrolleinrichtung 10 die Warnsignal-Ausgabeeinrichtung 16 und gibt als Schritt S4 ein Warnsignal aus. Das Bedienungspersonal der Tür weiß nun, dass ein unzulässiger Kabinen-Differenzdruck besteht und die Druckkabine für einen Druckausgleich zur Umgebungsatmosphäre zunächst belüftet werden muss, bevor die Tür geöffnet werden darf.

In der zuvor beschriebenen Differenzdruck-Warnroutine werden die einzelnen Routinenschritte also in einer Kette von aufeinander folgenden Prüfbedingungen kaskadenartig durchlaufen. Dadurch ist das KDWS 2 selbsttestfähig.

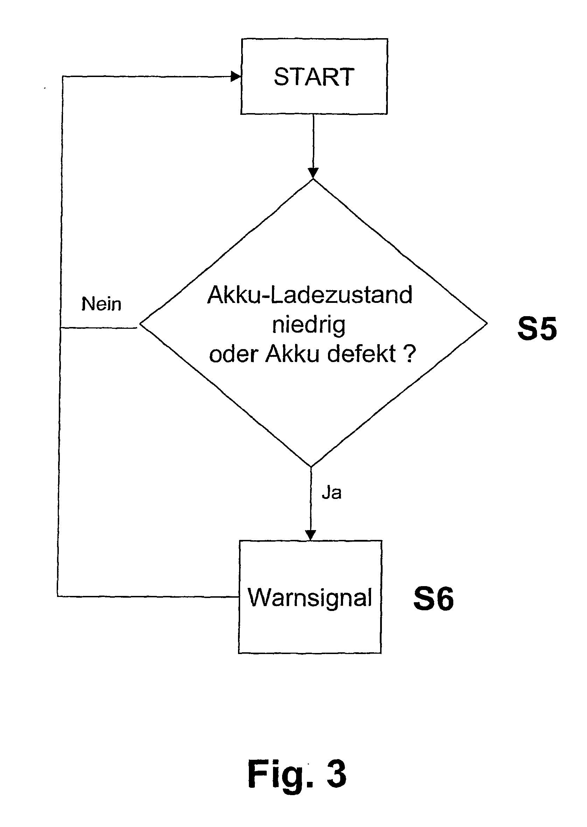

Fig. 3 zeigt ein zweites Flussdiagramm des KDWSs 2 von Fig. 1 mit einer Routine, welche den Zustand bzw. Ladezustand des Akkumulators 8 überwacht. Ausgehend von einer Startfunktion (START) wird in einem Schritt S5 mittels des Akkusensors 22 der Zustand bzw. Ladezustand des Akkumulators 8 überprüft. Erfasst der Akkusensor 22 eine Fehlfunktion des Akkumulators 8 oder einen zu niedrigen Ladezustand, wird als Schritt S6 ein Warnsignal ausgegeben. Zusätzlich dazu kann bei Bedarf mittels des Akkusensors 22 (wenn dieser als Akku-Sensorschalter ausgestaltet ist) die Verbindung der Kontrolleinrichtung 10 zum Akkumulator 8 überbrückt und die Kontrolleinrichtung 10 zum Laderegler 6 der Solarzellen 4 durchgeschaltet werden, so dass die Kontrolleinrichtung 10 über den Laderegler 6 direkt mit elektrischem Strom versorgt wird. Diese letztgenannte Schaltvariante ist in der Fig. 3 nicht dargestellt. Eine mit dieser Akkumulator-Überwachungsroutine vergleichbare Routine könnte grundsätzlich auch zur Überprüfung des Betriebszustands der Solarzellen 4 bereit gestellt werden.

Die zuvor beschriebene Akkumulator-Überwachungsroutine wird im vorliegenden Beispiel in der Kontrolleinrichtung 10 ausgeführt, wobei auch das Warnsignal im Schritt S6 von der Warnsignal-Ausgabeeinrichtung 16 generiert wird. Grundsätzlich könnte die Akkumulator-Überwachungsroutine natürlich auch von der Überwachung des Kabinen-Differenzdrucks getrennt in einer separaten Einrichtung durchgeführt werden, wobei auch ein separater Warnsignalgeber für den Schritt S6 verwendbar ist. Andererseits könnte die Akkumulator-Überwachungsroutine auch in die Routine von Fig. 2 und deren kaskadenartige Struktur integriert werden.

Die Erfindung ist nicht auf das obige Ausführungsbeispiel beschränkt. Im Rahmen des Schutzumfangs kann das erfindungsgemäße Luftfahrzeug vielmehr auch eine andere als die oben konkret beschriebene Ausgestaltungsform annehmen.

In dem obigen Ausführungsbeispiel kann dem Akkumulator 8 optional und zusätzlich zu den Solarzellen 4 und dem Laderegler 6 eine Schnittstelle zu einem externen, an das Luftfahrzeug anschließbaren Ladegerät zugeordnet sein. Ebenso ist eine Schnittstelle zu einem luftfahrzeuginternen Ladegerät denkbar, welches über das reguläre elektrische Energieversorgungsnetz des Luftfahrzeugs mit elektrischer Energie versorgt wird.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnet:
- 2: Kabinen-Differenzdruck-Warnsystem
- 4: Solarzelle(n)
- 6: Laderegler
- 8: Akkumulator
- 10: Differenzdruck-Kontrolleinrichtung
- 12: Datenverarbeitungseinrichtung
- 14: Differenzdrucksensor
- 16: Warnsignal-Ausgabeeinrichtung
- 18: Türsensor
- 20: Notrutschen-Sensor
- 22: Akkusensor

- ΔP: Kabinen-Differenzdruck
- ΔP_{S}: Differenzdruck-Schwellwert
- S1-S6: Routinen-Schritte

## Patentansprüche

1. Luftfahrzeug, umfassend eine Druckkabine mit einer verriegelbaren Tür, ein elektrisches Energieversorgungsnetz sowie ein Kabinen-Differenzdruck-Warnsystem (2), **gekennzeichnet durch** eine vom elektrischen Energieversorgungsnetz unabhängige, autonome Wamsystem-Energieversorgungseinrichtung (4, 6, 8), die eine photovoltaische Energieerzeugungseinrichtung (4) umfasst.

2. Luftfahrzeug nach Anspruch 1,
**dadurch gekennzeichnet, dass**
die Energieerzeugungseinrichtung (4) an der Tür, insbesondere an einer Luftfahrzeug-Außenseite der Tür angeordnet ist.

3. Luftfahrzeug nach Anspruch 1 oder 2,
**dadurch gekennzeichnet, dass**
die autonome Wamsystem-Energieversorgungseinrichtung eine mit der Energieerzeugungseinrichtung (4) gekoppelte Energie-Zwischenspeichereinrichtung (8), insbesondere eine elektrische Energie-Zwischenspeichereinrichtung (8), umfasst.

4. Luftfahrzeug nach einem oder mehreren der vorher genannten Ansprüche,
**dadurch gekennzeichnet, dass**
das Kabinen-Differenzdruck-Warnsystem (2) eine mit der unabhängigen, autonomen Wamsystem-Energieversorgungseinrichtung (4, 6, 8) gekoppelte Differenzdruck-Kontrolleinrichtung (10) mit einer Kabinendifferenzdruck-Sensoreinrichtung (14) und einer Warnsignal-Ausgabeeinrichtung (16) besitzt.

5. Luftfahrzeug nach einem oder mehreren der vorher genannten Ansprüche,
**dadurch gekennzeichnet, dass**
die Warnsignal-Ausgabeeinrichtung (16) ausgewählt ist aus einer Gruppe von Wamsignal-Ausgabeeinrichtung, umfassend: eine optische Wamsignal-Ausgabeeinrichtung, eine akustische Wamsignal-Ausgabeeinrichtung, eine Kombination aus den zuvor genanten Warnsignal-Ausgabeeinrichtung.

6. Luftfahrzeug nach einem oder mehreren der vorher genannten Ansprüche,
**dadurch gekennzeichnet, dass**
das Kabinen-Differenzdruck-Warnsystem (2) eine mit der Differenzdruck-Kontrolleinrichtung (10) gekoppelte Sensoreinrichtung (18) zum Erfassen eines Zustands der Tür besitzt.

7. Luftfahrzeug nach einem oder mehreren der vorher genannten Ansprüche, mit einer der Tür zugeordneten Notrutsche,
**dadurch gekennzeichnet, dass**
das Kabinen-Differenzdruck-Warnsystem (2) eine mit der Differenzdruck-Kontrolleinrichtung (10) gekoppelte Sensoreinrichtung (22) zum Erfassen eines Zustands der Energie-Zwischenspeichereinrichtung besitzt,

8. Luftfahrzeug nach einem oder mehreren der vorher genannten Ansprüche, mit einer der Tür zugeordneten Notrutsche,
**dadurch gekennzeichnet, dass**
das Kabinen-Differenzdruck-Warnsystem (2) eine mit der Differenzdruck-Kontrolleinrichtung (10) gekoppelte Sensoreinrichtung (20) zum Erfassen eines Zustands der Notrutsche besitzt.

9. Luftfahrzeug nach einem oder mehreren der vorher genannten Ansprüche,
**dadurch gekennzeichnet, dass**
die Differenzdruck-Kontrolleinrichtung (10) eine Datenverarbeitungseinrichtung (12) aufweist.

10. Luftfahrzeug nach einem oder mehreren der vorher genannten Ansprüche,
**dadurch gekennzeichnet, dass**
das Kabinen-Differenzdruck-Warnsystem (2) in die Tür integriert ist.

## Claims

1. Aircraft, comprising a pressurised cabin with a lockable door, an electric energy supply network and a cabin differential pressure warning system (2), **characterised by** an autonomous warning-system energy supply device (4, 6, 8) independent of the electric energy supply network and comprising a photovoltaic energy generating device (4).

2. Aircraft according to Claim 1,
**characterised in that**
the energy generating device (4) is arranged on the door, in particular on an outside of the door of the aircraft.

3. Aircraft according to Claim 1 or 2,
**characterised in that**
the autonomous warning-system energy supply device comprises an energy intermediate storage device (8) coupled to the energy generating device (4), in particular an electric energy intermediate storage device (8).

4. Aircraft according to one or more of the preceding claims,
**characterised in that**
the cabin differential pressure warning system (2) has a differential pressure control device (10) coupled to the independent, autonomous warning-system energy supply device (4, 6, 8) and having a cabin differential pressure sensor device (14) and a warning-signal emitting device (16) .

5. Aircraft according to one or more of the preceding claims,
**characterised in that**
the warning-signal emitting device (16) is selected from a group of warning-signal emitting devices, comprising: an optical warning-signal emitting device, an acoustic warning-signal emitting device, a combination of the aforementioned warning-signal emitting devices.

6. Aircraft according to one or more of the preceding claims,
**characterised in that**
the cabin differential pressure warning system (2) has a sensor device (18), coupled to the differential pressure control device (10), for detecting a state of the door.

7. Aircraft according to one or more of the preceding claims, having an emergency slide associated with the door,
**characterised in that**
the cabin differential pressure warning system (2) has a sensor device (22), coupled to the differential pressure control device (10), for detecting a state of the energy intermediate storage device.

8. Aircraft according to one or more of the preceding claims, having an emergency slide associated with the door,
**characterised in that**
the cabin differential pressure warning system (2) has a sensor device (20), coupled to the differential pressure control device (10), for detecting a state of the emergency slide.

9. Aircraft according to one or more of the preceding claims,
**characterised in that**
the differential pressure control device (10) includes a data processing device (12).

10. Aircraft according to one or more of the preceding claims,
**characterised in that**
the cabin differential pressure warning system (2) is integrated into the door.

## Revendications

1. Aéronef comprenant une cabine pressurisée comportant une porte verrouillable, un réseau d'alimentation d'énergie électrique et un système d'avertissement de pression différentielle cabine (2) **caractérisé par** un dispositif d'alimentation d'énergie autonome (4, 6, 8) du système d'avertissement, indépendant du réseau d'alimentation d'énergie électrique, qui comprend un dispositif de production d'énergie photovoltaïque (4).

2. Aéronef selon la revendication 1,
**caractérisé en ce que**
le dispositif de production d'énergie (4) est disposé sur la porte, notamment sur un côté extérieur de la porte de l'aéronef.

3. Aéronef selon la revendication 1 ou 2,
**caractérisé en ce que**
le dispositif d'alimentation d'énergie autonome du système d'avertissement comprend un dispositif de stockage temporaire d'énergie (8) couplé au dispositif de production d'énergie (4), notamment un dispositif de stockage temporaire d'énergie électrique (8).

4. Aéronef selon l'une quelconque ou plusieurs des revendications précédentes,
**caractérisé en ce que**
le système d'avertissement de pression différentielle cabine (2) comporte un dispositif de contrôle de pression différentielle (10) connecté au dispositif d'alimentation d'énergie autonome du système d'avertissement (4, 6, 8) et comportant un dispositif de capteur de pression différentielle cabine (14) ainsi qu'un dispositif d'édition de signal d'avertissement (16).

5. Aéronef selon l'une quelconque ou plusieurs des revendications précédentes,
**caractérisé en ce que**
le dispositif d'édition de signal d'avertissement (16) est sélectionné parmi un groupe de dispositifs d'édition de signal d'avertissement comprenant : un dispositif d'édition de signal d'avertissement optique, un dispositif d'édition de signal d'avertissement acoustique et une combinaison des deux dispositifs d'édition de signal mentionnés précédemment.

6. Aéronef selon l'une quelconque ou plusieurs des revendications précédentes,
**caractérisé en ce que**
le système d'avertissement de pression différentielle cabine (2) comporte un dispositif de capteur (18) permettant de détecter un état de la porte, couplé au dispositif de contrôle de pression différentielle (10).

7. Aéronef selon l'une quelconque ou plusieurs des revendications précédentes, comportant un toboggan d'évacuation affecté à la porte,
**caractérisé en ce que**
le système d'avertissement de pression différentielle cabine (2) comporte un dispositif de capteur (22) permettant de détecter un état du dispositif de stockage temporaire d'énergie, couplé au dispositif de contrôle de pression différentielle (10).

8. Aéronef selon l'une quelconque ou plusieurs des revendications précédentes, comportant un toboggan d'évacuation affecté à la porte,
**caractérisé en ce que**
le système d'avertissement de pression différentielle cabine (2) comporte un dispositif de capteur (20) permettant de détecter un état du toboggan d'évacuation, couplé au dispositif de contrôle de pression différentielle (10).

9. Aéronef selon l'une quelconque ou plusieurs des revendications précédentes,
**caractérisé en ce que**
le dispositif de contrôle de pression différentielle (10) comprend un dispositif de traitement des données (12).

10. Aéronef selon l'une quelconque ou plusieurs des revendications précédentes,
**caractérisé en ce que**
le système d'avertissement de pression différentielle cabine (2) est intégré dans la porte.
